# EUROPÄISCHE PATENTSCHRIFT

(11) **EP 0 461 482 B1**
(45) Veröffentlichungstag und Bekanntmachung des Hinweises auf die Patenterteilung: **18.09.1996**
(21) Anmeldenummer: 91108881.3
(22) Anmeldetag: 30.05.1991
(51) Int. Cl.: C08G 63/79, C08L 67/02, C08L 67/03, C08L 69/00, C08L 21/00, C08L 33/08

(54) **Verfahren zur Herstellung von Legierungen aus Kautschuken und aromatischen Polyestern**
Process for the preparation of compositions containing rubbers and aromatic polyesters
Procédé de préparation de compositions de caoutchoucs et de polyesters aromatiques

(30) Priorität: 12.06.1990 DE 4018717
(43) Veröffentlichungstag der Anmeldung: 18.12.1991
(73) Patentinhaber: BAYER AG, 51368 Leverkusen (DE)
(72) Erfinder: Lütjens, Holger, Dr., W-5000 Köln 80 (DE); Westeppe, Uwe, Dr., W-4020 Mettmann (DE); Piejko, Karl-Erwin, Dr., W-5060 Bergisch Gladbach 2 (DE); Lindner, Christian, Dr., W-5000 Köln 80 (DE)

(56) Entgegenhaltungen:
- EP-A- 0 175 161
- EP-A- 0 272 441
- EP-A- 0 387 594
- DE-A- 2 037 419
- DE-A- 3 717 172

## Beschreibung

Gegenstand der Erfindung ist ein Verfahren zur Herstellung einer Legierung aus vernetzten oder teilvernetzten Kautschuken und aromatischem Polyester. Im Prinzip besteht das Verfahren daraus, ein Gemisch eines Kautschuklatex und einer wäßrigen Lösung eines Alkali- oder Erdalkalidiphenolats mit einer Lösung eines Dicarbonsäurehalogenids und/oder eines Carbonylhalogenids in einem mit Wasser nicht mischbaren Lösungsmittel umzusetzen, wobei sich an der Phasengrenze Wasser/organisches Lösungsmittel ein aromatischer Polyester bildet, der in die organische Phase übergeht. Gleichzeitig geht auch der Kautschuk aus der wäßrigen in die organische Phase über. Wird dann die organische Phase abgetrennt und das organische Lösungsmittel entfernt, bleibt eine Legierung von Kautschuk und aromatischem Polyester zurück. Diese Legierung ist geeignet zur Herstellung von Formkörpern aller Art mit den Methoden der thermoplastischen Formgebung wie Extrusion und Spritzguß. Die Legierungen besitzen verbesserte Elastizität und Bruchdehnung, gute Oberflächeneigenschaften wie Glanz, Stippenfreiheit, Gleichmäßigkeit und eine besonders helle Farbe.

Die für das erfindungsgemäße Verfahren geeigneten Kautschuke liegen in Form ihrer Latices vor. Sie sind im allgemeinen teilvernetzt oder vernetzt und besitzen Erweichungstemperaturen unter 0°C. Diese Kautschuke und ihre Latices sind bekannt. Besonders geeignet sind Dienkautschuke, insbesondere Polymerisate von Butadien, Isopren, Chloropren mit gegebenenfalls bis zu 30 Gew.-% eines Comonomeren wie Styrol, Acrylnitril, Alkylacrylat, Vinylether und Acrylatkautschuke, insbesondere Polymerisate von Alkylacrylaten mit gegebenenfalls bis zu 50 Gew.-% Comonomeren wie Butadien, Alkylmethacrylat, Vinylacetat, Styrol, Vinyl, Alkylether, Acrylnitril, Olefinkautschuke, insbesondere aus Ethylen mit Comonomeren wie Vinylacetat, Alkylacrylat, Kohlenmonoxid, Propylen, Isobutylen und ferner Silikonkautschuke, insbesondere aus Struktur-Einheiten der allgemeinen Formel

RₙSiO_{4-n/2},

worin R ein einwertiger Kohlenwasserstoffrest, z.B. C₁-C₁₈-Alkyl oder C₆-C₁₀-Aryl ist und n einen Durchschnittswert von 1 bis weniger als 3 besitzt.

Die Kautschuke liegen, wie gesagt, als Latices vor, die mittleren Teilchendurchmesser (d₅₀) in den Latices sind 0,05 bis 1,5, insbesondere 0,07 bis 0,5 µm. die Gelgehalte als Maß für die Vernetzung sind >20 %, bevorzugt >50 Gew.-%, besonders bevorzugt >80 %.

Besonders bevorzugt sind Acrylatkautschuke, die vorzugsweise durch radikalische Emulsionspolymerisation erhalten worden sind. Hier handelt es sich um vernetzte, teilchenförmige Emulsionspolymerisate von C₁-C₈-Alkylacrylaten, insbesondere C₂-C₈-Alkylacrylaten, gegebenenfalls in Mischung mit bis zu 15 Gew.-% eines Comonomeren wie Styrol, Methylmethacrylat, Butadien, Vinylmethylether, Acrylnitril und wenigstens einem polyfunktionellen vernetzendem Comonomer, wie Divinylbenzol, Glykolbisacrylat, Butandiolbisacrylat, Bisacrylamid, Phosphorsäuretriallylester, Allylester der Acrylsäure, Allylester der Methacrylsäure, Triallylcyanurat, Triallylisocyanurat in Mengen bis zu 4 Gew.-%, bezogen auf die gesamten Monomeren.

Auch Kautschuke mit Kern/Mantel-Struktur, wie beispielsweise in DE-OS 32 00 070 und DE-OS 37 04 657 beschrieben, können verwendet werden.

Den aromatischen Polyestern - der Begriff schließt erfindungsgemäß aromatische Polyester, aromatische Polycarbonate und aromatische Polyestercarbonate ein -, die im Rahmen der Erfindung hergestellt werden, liegen Bisphenole der Formel (I) zugrunde 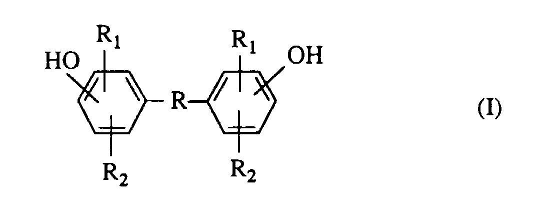 mit R₁, R₂ = H, C₁-C₄-Alkyl, Halogen, bevorzugt H, CH₃, Cl, Br,
R = Einfachbindung, C₁-C₁₂-Alkylen, C₅-C₂₀-Cycloalkylen, Arylen, bevorzugt -CH₂-, C₂H₄-, -C₃H₆-, -S-,

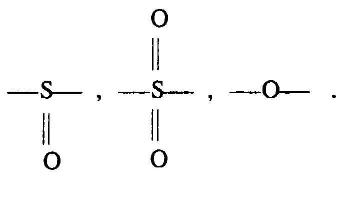

Geeignete Diphenole der Formel (I) sind beispielsweise Hydrochinon, Resorcin, 4,4-Dihydroxyphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-(Bis-4-hydroxyphenyl)-3,3,5-trimethylcyclohexan. Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan, 1,1-(Bis-4-hydroxyphenyl)-3,3,5-trimethylcylcohexan, besonders bevorzugt 2,2-Bis-(4-hydroxyphenyl)-propan.

Zur Bildung von aromatischen Polycarbonaten werden diese Diphenole mit Carbonylhalogeniden wie Carbonylbromid, Phosgen oder dessen Gemischen, oder mit Bischloroformiaten von 2,2-Bis-(4-hydroxyphenyl)-propan; 2,2-Bis-(4-hydroxy-3,5-dichlorphenyl)-propan oder Hydrochinon umgesetzt.

Zur Herstellung von aromatischen Polyestern verwendet man zur Umsetzung Dicarbonsäurehalogenide, beispielsweise Oxalylchlorid, Succinylchlorid, Fumarylchlorid, Glutarylchlorid, Adipylchlorid, Pimelylchlorid, Suberylchlorid, Azelaylchlorid, Sebacylchlorid, Phthaloylchlorid, Isophthaloylchlorid, Terephthaloylchlorid. Bevorzugt sind Terephthaloylchlorid, Isophthaloylchlorid und deren Gemische, wobei das Verhältnis der Isophthaloylreste zu den Terephthaloylresten vorzugsweise 3:7 bis 7:3, insbesondere 4,5:5,5 bis 5,5:4,5, ist.

Zur Herstellung von Polyestercarbonaten verwendet man ein Gemisch aus Carbonylhalogenid und Dicarbonsäurehalogenid in einer solchen Menge, daß sich, bezogen auf die Summe von Ester- und Carbonatgruppierungen bis zu 90, vorzugsweise bis zu 45, Mol-% Carbonatgruppierungen bilden.

Das erfindungsgemäße Verfahren selbst kann nach den bekannten Regeln der Phasengrenzflächenpolykondensation ausgeführt werden, wie sie z.B. in Chemistry and Physics of Polycarbonates, Polymer Reviews, Bd. IX, Seiten 33 ff., Interscience Publishers (1964) beschrieben sind.

Erfindungsgemäß werden Alkali- oder Erdalkalisalze der Diphenole der Formel (I) als wäßrige Lösungen in Gegenwart wäßriger Kautschuk-Latices mit Dicarbonsäurehalogeniden und/oder Carbonylhalogeniden in mit Wasser nicht mischbaren inerten organischen Lösungsmitteln umgesetzt unter Bildung der erfindungsgemäßen Polyester-Kautschuk-Legierungen. Das erfindungsgemäße Verfahren kann beispielsweise wie folgt ausgeführt werden: der wäßrige Latex eines vernetzten oder teilvernetzten Kautschukes, bevorzugt eines Acrylatkautschuks, wird mit einer wäßrigen Lösung eines Salzes des Diphenols der Formel (I) bei 0 bis 50°C, bevorzugt 10 bis 25°C, vermischt. Die Kautschuk-Latices besitzen vorzugsweise einen Feststoffgehalt von 10 bis 50 Gew.-%, insbesondere 15 bis 40 Gew.-%. Die wäßrigen Diphenolatlösungen können durch Lösen des Diphenols der Formel (I) in einer wäßrigen Alkalihydroxidlösung, vorzugsweise Natronlauge hergestellt werden. Besonders bevorzugtes Diphenol der Formel (I) ist 2,2-Bis-(4-hydroxyphenyl)-propan. Dann wird unter Durchmischung ein mit Wasser nicht mischbares inertes organisches Lösungsmittel, vorzugsweise Methylenchlorid und/oder Chlorbenzol, das gegebenenfalls Phasentransferkatalysatoren z.B. quartäre Ammoniumverbindungen gelöst enthält, in etwa der 20 bis 80fachen Gewichtsmenge des Kautschuks im Latex, zugegeben.

In diese stark gerührte Mischung wird dann das Dicarbonsäurehalogenid oder das Carbonylhalogenid, oder beides gleichzeitig, bei 0 bis 50°C, vorzugsweise 10 bis 25°C, innerhalb eines Zeitraumes von 5 Minuten bis 5 Stunden, vorzugsweise 5 Minuten bis 2 Stunden, gegeben. Bevorzugte Dicarbonsäurehalogenide sind Terephthalsäuredichlorid und Isophthalsäuredichlorid sowie deren Gemische, bevorzugtes Carbonylhalogenid ist Phosgen.

Man kann auch zunächst den wäßrigen Kautschuk-Latex mit dem inerten organischen Lösungsmittel, das gegebenenfalls Phasentransferkatalysatoren enthält, bei 0 bis 50°C, vorzugsweise 10 bis 25°C, vermischen, und die wäßrige Lösung eines Salzes des Diphenols der Formel (I) und die Dicarbonsäurehalogenide und/oder die Carbonylhalogenide innerhalb eines Zeitraumes von 5 Minuten bis 5 Stunden, vorzugsweise 5 Minuten bis 2 Stunden, bei 0 bis 50°C, vorzugsweise 10 bis 25°C, gegebenenfalls unter Rühren der Reaktionsmischung zufügen, und zwar in dieser Reihenfolge oder gleichzeitig.

Werden Dicarbonsäurehalogenide und Carbonylhalogenide nebeneinander eingesetzt, ist es vorteilhaft, zunächst Dicarbonsäurehalogenid und danach Carbonylhalogenid zuzufügen. Nach Zugabe des Carbonylhalogenids können gegebenenfalls Katalysatoren beispielsweise tertiäre Amine, wie z.B. Triethylamin oder N-Ethylpiperidin zugesetzt werden.

Das Molekulargewicht des aromatischen Polyesters - im Sinne der oben gegebenen Definition - kann gegebenenfalls durch Zusatz eines Kettenabbrechers in bekannter Weise geregelt werden. Geeignete Kettenabbrecher sind beispielsweise Phenol und Phenole mit C₁-C₂₂-Alkylgruppen wie p-tert.-Butylphenol und p-Isooctylphenol.

Als Säureakzeptoren können tertiäre Amine, Alkalihydroxide oder Erdalkalihydroxide, vorzugsweise Natriumhydroxid, verwendet werden.

Das Gewichtsverhältnis Polyester:Kautschuk in den erfindungsgemäß hergestellten Polymerlegierungen ist 95:5 bis 5:95, vorzugsweise 95:5 bis 20:80, besonders bevorzugt 95:5 bis 30:70. Zur Isolierung der erfindungsgemäß hergestellten Polymerlegierungen kann die organische Phase zunächst von der wäßrigen Phase abgetrennt, dann mit organischen Säuren oder mineralischen Säuren, beispielsweise Phosphorsäure, neutral und anschließend mit Wasser elektrolytfrei gewaschen werden. In manchen Fällen ist es vorteilhaft, die ganze Reaktionsmischung mit organischen Säuren oder mineralischen Säuren zu neutralisieren und erst anschließend die organische Phase abzutrennen und mit Wasser zu waschen. Aus der organischen Phase kann die Polymerlegierung beispielsweise durch Abdestillieren des organischen Lösungsmittels, durch Ausdampfen in entsprechenden Aggregaten oder durch Koagulation isoliert werden.

Die abgetrennte organische Phase kann beispielsweise zur Koagulation auch in organische Flüssigkeiten mit geringer Löslichkeit für die aromatischen Polyester unter Durchmischung eingetragen oder mit diesen versetzt werden. Als solche organische Flüssigkeiten werden bevorzugt aliphatische Kohlenwasserstoffe und deren Gemische wie Hexan, Heptan oder aliphatische Alkohole wie Methanol, Ethanol, Isopropanol verwendet.

Nach Koagulation kann die Polymerlegierung beispielsweise durch Filtration oder Zentrifugieren abgetrennt und gegebenenfalls gewaschen werden, z.B. mit Wasser.

Die erfindungsgemäß hergestellten Polymerlegierungen eignen sich zur Herstellung von Formkörpern aller Art, z.B. Folien, Fasern und Apparateteilen. Sie zeigen verbesserte Elastizität und Bruchdehnung, gute Oberflächenbeschaffenheit wie Glanz, Stippenfreiheit, Gleichmäßigkeit und Rohton.

### Beispiele

### Beispiel 1

### Herstellung des Kautschuklatex

In einem Reaktor werden unter Stickstoff 1.030 Gew.-Teile Wasser und 5 Gew.-Teile Natriumsalz von C₁₄-C₁₈-Alkylsulfonsäuren vorgelegt und auf 70°C erhitzt. Hierzu fügt man eine Mischung aus 80 Gew.-Teilen n-Butylacrylat und 0,4 Gew.-Teilen 1,4-Butandioldiacrylat. Anschließend gibt man bei 70°C eine Lösung aus 3 Gew.-Teilen Kaliumperoxodisulfat und 60 Gew.-Teilen Wasser hinzu. Dann werden innerhalb 5 Stunden gleichmäßig zugefügt:
- Zulauf 1:: 920 Gew.-Teile n-Butylacrylat 4,6 Gew.-Teile 1,4-Butandioldiacrylat
- Zulauf 2:: 20 Gew.-Teile Natriumsalz von C₁₄-C₁₈-Alkylsulfonsäuren 700 Gew.-Teile Wasser

Danach wird noch 4 Stunden bei 70°C gerührt. Der erhaltene Latex besitzt einen Feststoffgehalt von 36,5 Gew.-%. Der Gelgehalt des Polymerisats beträgt 90,0 Gew.-% (in Tetrahydrofuran gemessen). Dieser Latex wird mit Wasser auf einen Feststoffgehalt von 20 Gew.-% verdünnt und in den Beispielen 2.1 bis 2.6 eingesetzt.

### Beispiel 2

### Herstellung der Polyester/Kautschuk-Legierungen

1. 45 g des Latex aus Beispiel 1 werden unter Durchmischung mit 450 g Methylenchlorid, die 0,645 g Tetrabutylammoniumbromid gelöst enthalten, versetzt. Unter ständiger Durchmischung werden gleichmäßig innerhalb von 15 Minuten zugefügt:
   - Zulauf 1:: Lösung von:
   22,83 g (0,10 Mol) 2,2-Bis-(4-hydroxyphenyl)-propan (im weiteren Text Bisphenol A) mit 10,0 g (0,25 Mol) Natriumhydroxid in 560 g Wasser
   - Zulauf 2:: Lösung von:
   10,36 g (0,051 Mol) Terephthaloylchlorid und 10,36 g (0,051 Mol) Isophthaloylchlorid in 50 g Methylenchlorid.

   Danach wird noch 1 Stunde gerührt und zur Aufarbeitung die wäßrige Phase abgetrennt.
   Die organische Phase wird mit verdünnter Phosphorsäure neutral und anschließend mit Wasser elektrolytfrei gewaschen.
   Durch Vermischen der organischen Phase mit Petrolether wird die Polymerlegierung gefällt und durch Filtration von der organischen Flüssigkeit abgetrennt, mit Wasser gewaschen und getrocknet.
   Menge an Polymerisat: 43,0 g
   Gelgehalt (gemessen in Tetrahydrofuran): 17,7 Gew.-%
   [η] der Solphase: 0,65
   [η] : Intrinsic-Viskosität, gemessen in Tetrahydrofuran bei 25°C
2. Man verfährt wie in Beispiel 2.1, verwendet aber
   - 120 g: Latex aus Beispiel 1
   - 1.450 g: Methylenchlorid mit 0,645 g gelöstem Tetrabutylammoniumbromid

   - Zulauf 1:: wie in Beispiel 2.1
   - Zulauf 2:: wie in Beispiel 2.1

   Menge an Polymerisat: 58 g
   Gelgehalt (gemessen in Tetrahydrofuran): 36,2 Gew.-%
   [η] der Solphase: 0,52
3. Man verfährt wie in Beispiel 2.1, verwendet aber
   - 90 g: Latex aus Beispiel 1
   - 1.200 g: Methylenchlorid mit 0,645 g gelöstem Tetrabutylammoniumbromid

   - Zulauf 1: Lösung von:: 11,42 g (0,050 Mol) Bisphenol A und 5,0 g (0,125 Mol) Natriumhydroxid in 280 g Wasser
   - Zulauf 2: Lösung von:: 5,18 g (0,0255 Mol) Terephthaloylchlorid und 5,18 g (0,0255 Mol) Isophthaloylchlorid in 35 g Methylenchlorid

   Menge an Polymerisat: 35,2 g
   Gelgehalt (gemessen in Tetrahydrofuran): 43,8 Gew.-%
   [η] der Solphase: 0,36
4. Man verfährt wie in Beispiel 2.1, verwendet aber
   - 45 g: Latex aus Beispiel 1
   - 450 g: Methylenchlorid mit 0,645 g gelöstem Tetrabutylammoniumbromid

   - Zulauf 1: Lösung von:: 0,90 g p-tert.-Butylphenol (6 Mol-%, bezogen auf Bisphenol A),
   22,83 g (0,10 Mol) Bisphenol A und 10,0 g (0,25 Mol) Natriumhydroxid in 560 g Wasser
   - Zulauf 2: wie in Beispiel 2.1: Menge an Polymerisat: 43,7 g
   Gelgehalt (gemessen in Tetrahydrofuran): 17,6 Gew.-%
   [η] der Solphase: 0,32
5. 45 g des Latex aus Beispiel 1 werden unter Durchmischung mit 450 g Methylenchlorid, die 0,645 g Tetrabutylarnmoniumbromid gelöst enthalten, versetzt und dann unter Durchmischung eine Lösung von
   22,83 g (0,10 Mol) Bisphenol A und
   10,0 g (0,25 Mol) Natriumhydroxid in
   560 g Wasser
   binnen 20 Minuten in die Reaktionsmischung eingetragen. Danach führt man eine Lösung von:
   0,45 g p-tert.-Butylphenol (3 Mol-% bezogen auf Bisphenol A),
   10,36 g (0,051 Mol) Terephthaloylchlorid und
   10,36 g (0,051 Mol) Isophthaloylchlorid in
   50 g Methylenchlorid binnen 15 Minuten zu.
   Nach Beenden der Zudosierung wird noch 1 Stunde gerührt und wie in Beispiel 2.1 aufgearbeitet.
   Menge an Polymerisat: 44,1 g
   Gelgehalt (gemessen in Tetrahydrofuran): 18,2 Gew.-%
   [η]-Solphase: 0,48
6. 29 g des Latex aus Beispiel 1 werden mit einer Lösung von:
   22,83 g (0,10 Mol) Bisphenol A und
   24,0 g (0,60 Mol) Natriumhydroxid in
   250 g Wasser
   durchmischt.
   Anschließend werden 250 g Methylenchlorid, die 0,965 g Tetrabutylammoniumbromid gelöst enthalten, unter Durchmischen zugegeben und dann 19,8 g (0,20 Mol) Phosgen eingeleitet und 45 Minuten lang nachgerührt. Aufgearbeitet wird wie in Beispiel 2.1.
   Menge an Polymerisat: 30,4g
   Gelgehalt (gemessen in Tetrahydrofuran): 16,7 Gew.-%
   [η]-Solphase: 0,37

Die Polymerlegierungen der Beispiele 2.1 bis 2.6 sind frei fließende, pulverförmige Produkte, die keine Neigung zum Verklumpen oder Verlieben zeigen. Die Polymerlegierungen der Beispiele 2.1, 2.4, 2.5 und 2.6 lassen sich zur Herstellung fester Gießfolien verwenden.

### Beispiel 3

1. 3 g der Polymerlegierung aus Beispiel 2.1 werden zu 17 g Tetrahydrofuran (THF) gegeben und 2 Stunden bei Zimmertemperatur gerührt (700 U/min; U = Umdrehung). Aus der so hergestellten Dispersion (15 gew.-%ig) werden Filme gegossen (500 µm, naß) und bis zur Gewichtskonstanz bei 50°C getrocknet.
   Die Filme zeichnen sich durch Homogenität und Stippenfreiheit aus.
2. (Vergleich zu 3.1):
   2,4 g eines aromatischen Polyester (aus Bisphenol A) und Terephthaloylchlorid/Isophthaloylchlorid (1:1) mit einer Intrinsic-Viskosität [η] = 0,41; gemessen in Tetrahydrofuran bei 25°C) werden in 17 g Tetrahydrofuran bei Zimmertemperatur gelöst. Hierzu gibt man 0,6 g feinen Kautschuk (erhalten aus dem Latex des Beispiels 1 durch Koagulation mit Magnesiumsulfat/Eisessig-Lösung bei 80 bis 90°C, waschen und trocknen) und rührt 2 Stunden (700 U/min). Der Kautschuk wird hierbei nicht verteilt; er liegt in Form großer Agglomerate (Klumpen) in der Lösung des Polyesters vor. Eine homogene Folie konnte nicht hergestellt werden.

### Beispiel 4 (Vergleichsbeispiel zu 2.6)

Auf einem Doppelwellenextruder wurde versucht, 20 Gew.-Teile des Kautschukpulvers (erhalten aus dem Latex des Beispiels 1 durch Koagulation mit Magnesiumsulfat/Eisessig-Lösung bei 80 bis 90°C, Waschen und Trocknen) in 80 Gew.-Teile eines Polycarbonats (Makrolon 2802) einzuarbeiten. Es zeigte sich, daß das Kautschukpulver nicht eingearbeitet werden konnte, da eine gleichmäßige Dosierung nicht möglich war.

## Patentansprüche

1. Verfahren zur Herstellung einer Legierung aus vernetzten oder teilvernetzten Kautschuken und aromatischem Polyester, dadurch gekennzeichnet, daß ein Gemisch eines Kautschuklatex und einer wäßrigen Lösung eines Alkali- oder Erdalkalidiphenolats mit einer Lösung eines Dicarbonsäurehalogenids und/oder eines Carbonylhalogenids in einem mit Wasser nicht mischbaren Lösungsmittel umgesetzt wird, wobei sich an der Phasengrenze Wasser/organisches Lösungsmittel ein aromatischer Polyester bildet, der in die organische Phase übergeht und gleichzeitig der Kautschuk aus der wäßrigen in die organische Phase übergeht und dann die organische Phase abgetrennt und das organische Lösungsmittel entfernt werden.

2. Verfahren nach Anspruch 1, worin der Kautschuklatex Kautschukteilchen eines mittleren Teilchendurchmesser (d₅₀) von 0,05 bis 1,5 µm enthält, die einen Gelanteil von mehr als 20 Gew.-% besitzen.

3. Verfahren nach Anspruch 1, worin der Kautschuk ein Acrylat-Kautschuk ist.

4. Verfahren nach Anspruch 1, worin der Kautschuk ein vernetztes Poly(n-butylacrylat) ist.

5. Verfahren nach Anspruch 1, worin der aromatische Polyester ein Polycarbonat oder ein Polyester auf Basis von Bisphenol A ist.

## Claims

1. Process for the preparation of an alloy of cross-linked or partially cross-linked rubbers and aromatic polyester, characterised in that a mixture of a rubber latex and an aqueous solution of an alkali metal diphenolate or an alkaline earth metal diphenolate is reacted with a solution of a dicarboxylic acid halide and/or of a carbonyl halide in a water-immiscible solvent, wherein there is formed at the water/organic solvent phase boundary an aromatic polyester which passes over into the organic phase while the rubber passes simultaneously from the aqueous phase into the organic phase, and the organic phase is then separated and the organic solvent is removed.

2. Process according to Claim 1, in which the rubber latex contains rubber particles having an average particle diameter (d₅₀) of from 0.05 to 1.5 µm and a gel content greater than 20 wt-%.

3. Process according to Claim 1, in which the rubber is an acrylate rubber.

4. Process according to Claim 1, in which the rubber is a cross-linked poly(n-butylacrylate).

5. Process according to Claim 1, in which the aromatic polyester is a polycarbonate or a polyester based on bisphenol A.

## Revendications

1. Procédé pour la préparation d'une composition constituée de caoutchouc réticulé ou partiellement réticulé et de polyester aromatique, caractérisé en ce qu'on fait réagir un mélange d'un latex de caoutchouc et d'une solution aqueuse d'un phénolate alcalin ou alcalino-terreux avec une solution d'un halogénure d'acide dicarboxylique et/ou d'un halogénure de carbonyle dans un solvant non miscible à l'eau, un polyester aromatique se formant à l'interface eau/solvant organique, lequel passe dans la phase organique et simultanément le caoutchouc passe de la phase aqueuse dans la phase organique et on sépare ensuite la phase organique et on élimine le solvant organique.

2. Procédé selon la revendication 1, dans lequel le latex de caoutchouc contient des particules de caoutchouc d'un diamètre moyen de particules (d₅₀) de 0,05 à 1,5 µm qui présentent une part en gel supérieure à 20% en poids.

3. Procédé selon la revendication 1, dans lequel le caoutchouc est un caoutchouc d'acrylate.

4. Procédé selon la revendication 1, dans lequel le caoutchouc est un poly(acrylate de n-butyle)réticulé.

5. Procédé selon la revendication 1, dans lequel le polyester aromatique est un polycarbonate ou un polyester à base de bisphénol A.
